# EUROPEAN PATENT APPLICATION

(11) **EP 4 848 019 A1**
(43) Date of publication of application: **02.12.2026**
(21) Application number: 26176825.3
(22) Date of filing: 06.05.2026
(51) Int. Cl.: G05B 19/418

(54) **MULTIPLE MODES OF DATA ROUTING IN A PROCESS CONTROL SYSTEM**

(30) Priority: 27.05.2025 US 202519219454
(71) Applicant: Schneider Electric Systems USA, Inc., Foxborough, MA 02035 (US)
(72) Inventor: MAGU, Ashish, Foxboro, 02035 (US)
(74) Representative: Openshaw & Co.

(57) **Abstract**

Apparatus and associated methods relate to providing a communications interface between a Field Control Processor, FCP, (28) and a plurality of field devices, such as sensors and/or actuators. To provide such a communications interface, a System Communications Module, SCM, (30) is configured to perform at least two functions: i) to relay the communications received from the FCP (28) over an optical fiber to another SCM; and ii) to transmit a subset of the commands contained in the communications received from the FCP (28) to field sensors S and actuators A that are connected to the SCM (30).

## Description

### BACKGROUND

Process control relates to system and methods to monitor and control continuous processes using controlled field devices, such as field sensors and actuators. Automating such processes enhances the smooth running, repeatability, and safety of such processes and the resulting products. Such automation also ensures that energy is used efficiently for transforming raw materials into high-quality finished products with reliable consistency while reducing energy waste and economic costs.

Some industrial processes can be complicated with expansive remote industrial processing sites. Such complicated industrial control processes can have numerous processing steps, which are monitored and controlled by a great many field sensors and actuators, some of which can be geographically located at great distances from a process-control facility configured to interface with such sensors and actuators.

### SUMMARY

Some embodiments relate to a process control system for providing a communication interface between a Field Control Processor (FCP) and a plurality of field devices, the plurality of field devices comprising two or more devices selected from the group consisting of sensors and actuators. The process control system includes a first System Communications Module (SCM) configured to: i) receive communications from the FCP, the communications including commands addressed to the plurality of field devices; and ii) transmit the received communications via a first optical fiber. The process control system including a second SCM configured in a remote-mode of operation. In the remote-mode of operation the second SCM is configured to: i) receive the communications transmitted thereto from the first SCM over the first optical fiber; ii) relay the communications received from the first SCM over the first optical fiber to one or more other remote field junction boxes via one or more other optical fibers; iii) receive an indication of a set of addresses that corresponds to a subset of the plurality of field devices, the subset of the plurality of field devices being controlled by the second SCM; iv) decode the communications to identify a subset of the commands that correspond to the set of addresses indicated; and v) transmit the subset of the commands to the subset of the plurality of field devices that are controlled by the second SCM.

Some embodiments relate to a System Communications Module (SCM) for providing a communication interface between a Field Control Processor (FCP) and a plurality of field devices, the plurality of field devices comprising two or more devices selected from the group consisting of sensors and actuators. The SCM includes a small form-factor pluggable (SFP) port configured to accept a first optical receiver configured to receive communications from the FCP over a first optical fiber. The communications include commands addressed to the plurality of field devices. The system includes a relay controller configured to relay the communications received from the FCP over the first optical fiber to one or more remote field junction boxes via one or more other optical fibers. The system includes an address selection switch configured to generate a selection signal indicating a set of addresses that corresponds to a subset of the plurality of field devices. The subset of the plurality of field devices are controlled by the SCM. The system includes a decoder configured to decode the communications to identify a subset of the commands that correspond to the indicated address space. The system also includes a transmitter configured to transmit the subset of the commands to the subset of the plurality of field devices that are controlled by the SCM.

Some embodiments relate to a method for transmitting commands and relaying communications from a Field Control Processor (FCP) and a plurality of field devices, the plurality of field devices comprising two or more devices selected from the group consisting of sensors and actuators. In the method, communications from the FCP are received over a first optical fiber. The communications received include commands addressed to the plurality of field devices. The communications received from the FCP are relayed over the first optical fiber to one or more remote field junction boxes via one or more other optical fibers. An indication of a set of addresses that corresponds to a subset of the plurality of field devices is received. The subset of the plurality of field devices are controlled by the SCM. The communications are decoded to identify a subset of the commands that correspond to the indicated address space. The subset of the commands are transmitted to the subset of the plurality of field devices that are controlled by the SCM.

### BRIEF DESCRIPTION OF THE DRAWINGS

The material described herein is illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Moreover, where considered appropriate, reference labels have been repeated among the figures to indicate corresponding or analogous elements. In the figures:
FIG. 1 is a schematic diagram of an example of a process control system having flexible configurability of communications routing.
FIG. 2 is a front view of an example of a junction box that houses electronics configured to facilitate control of a process.
FIG. 3 is a front view of a quad-mode system communications module (SCM) baseplate configured in a quad-mode configuration.
FIG. 4 is a front view of a star-mode SCM baseplate configured in a star-mode configuration.
FIG. 5 is a front view of a remote-mode SCM baseplate configured in a remote-mode configuration.
FIG. 6 is a front view of a Universal Input/Output Module (UIOM) baseplate for translating commands to and from field sensors and actuators.
FIG. 7 is a perspective view of examples of small form-factor pluggable SFP modules.
FIG. 8 is a schematic diagram of an example configuration of a process control system using a quad-mode SCM baseplate and daisy-chain connected remote-mode SCM baseplates.
FIG. 9 is a schematic diagram of an example configuration of a process control system using a plurality of SCMs configured in a remote-mode configuration and connected in daisy-chain fashion via electrical conductors.
FIG. 10 is a schematic diagram of an example configuration of a process control system using an SCM configured in a star-mode configuration via optical fibers.
FIG. 11 is a schematic diagram of an example configuration of a process control system using an SCM configured in a daisy-chain fashion via optical fibers.
FIG. 12 is a flow chart for a method of communication between a Field Control Processor (FCP) and a plurality of field sensors and/or actuators.

### DETAILED DESCRIPTION

Apparatus and associated methods relate to providing a communications interface between a Field Control Processor (FCP) and a plurality of field devices, including but not limited to field sensors and/or actuators. Such a communications interface provides great flexibility of configuration that addresses difficulties related to communications to and over expansive remote industrial processing sites. To provide such flexibility, a System Communications Module (SCM) can be configured in various modes of operation. For example, an SCM can be configured to also transmit a subset of commands contained in communications received from the FCP to field sensors and/or actuators that are controlled by the FCP. The SCM can be configured to also relay such communications received from the FCP to one or more other remote field junction boxes. Moreover, the SCM can be configured to relay such communications to the one or more other remote field junction boxes in a variety of manners. For example, the SCM can be configured to relay these communications to a plurality of other SCMs connected in daisy-chain fashion or in star-configured fashion. The SCM can be configured to relay these communications via electrical conductors or via optical fibers. These configurations will be described in greater detail below with reference to the figures. Such flexibility of configuration facilitates process control operations that expand or otherwise change with time, as well as those that are expansive and thus might require multiple communications interfaces.

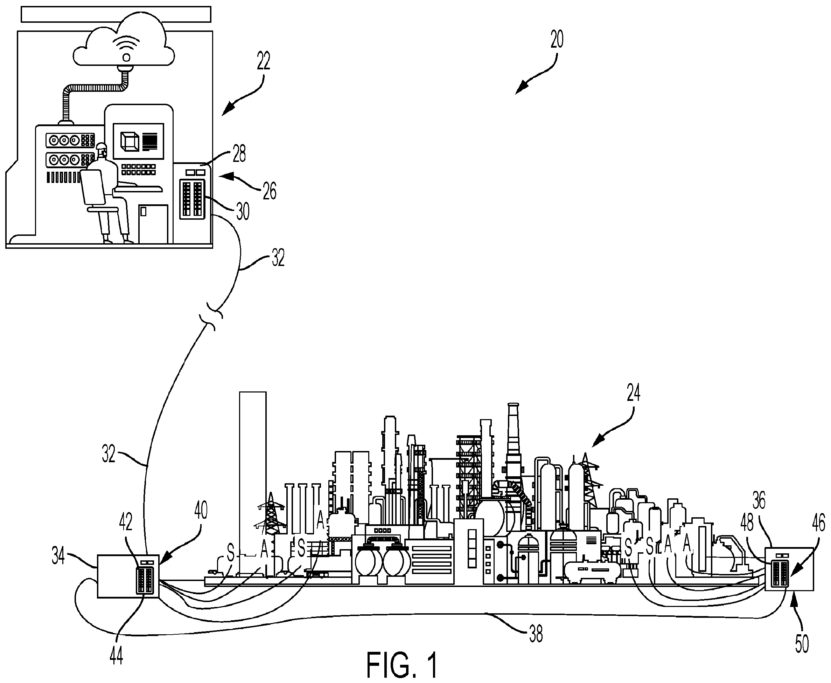

FIG. 1 is a schematic diagram of an example of a process control system having flexible configurability of communications routing. In FIG. 1, industrial process 20 is controlled from control room 22 but is performed at industrial processing site 24, which is at a location remote from control room 22. Within control room 22 is control-room junction box 26, which houses Field Control Processor (FCP) 28 and first System Communications Module (SCM) 30. FCP 28 is configured to control the operation of industrial process 20 by generating communications that include commands addressed to field sensors S and actuators A, which monitor and perform various operations of industrial process 20, respectively. Such field sensors S and actuators A are located at industrial processing site 24, where industrial process 20 is physically and/or chemically performed. Because field sensors S and actuators A are located at industrial processing site 24, the communications generated by FCP 28 are transmitted from control room 22 to industrial processing site 24, where the commands addressed to field sensors S and actuators A will ultimately be relayed thereto. First SCM 30 is configured to facilitate communications between control room 22 and industrial processing site 24.

Communications between control room 22 and industrial processing site 24 can be performed via electrical conductors, or optical fibers, or using combinations thereof. For transmissions that are performed over long distances (e.g., over distances measured in kilometers), such communications are typically performed optically over optical fiber but not limiting thereto. For transmissions that are performed over short distances (e.g., over distances not greater than 60 meters), such communications are typically performed electrically over copper conductors but not limited thereto. Because control room 22 is located at a great distance from industrial processing site 24 in the depicted embodiment, first optical fiber 32 is used for communications therebetween. To perform such optical communications over first optical fiber 32, first SCM 30 is configured to receive the communications generated by FCP 28. First SCM 30 then transmits, via first optical fiber 32, the communications received from FCP 28 to first process-control facility 34, which is located at industrial processing site 24. Similarly, first SCM 30 receives communications transmitted from first process-control facility 34 and then transmits the communications received to FCP 28. In this way, first optical fiber 32 conveys bidirectional communications between control room 22 and industrial processing site 24.

Some industrial processes can be complicated with expansive and remote industrial processing sites, such as industrial processing site 24 in the depicted embodiment. Such complicated industrial processes can have numerous processing steps, which are monitored and controlled by a great many field sensors S and actuators A, some of which can be geographically located at great distances from first process-control facility 34. The distances from first process-control facility 34 to some of field sensors S and actuators A can exceed a specified communications distance for conductive communications. To provide communications to field sensors S and actuators A, which are located at a great distance from first process-control facility 34, second process-control facility 36 can be situated near such field sensors S and actuators A. Thus, first process-control facility 34 is connected to and configured to provide commands addressed to (and from) those field sensors S and actuators A located within a specified distance therefrom. Second control facility 36 is connected to and configured to provide commands addressed to those field sensors S and actuators A located at distances greater than the specified distance from first control facility 34 but within the specified distance of second control facility 36. Because first and second process-control facilities 34 and 36 are located at a distance greater than the specified distance from one another, communications therebetween are optically performed over second optical fiber 38.

Within first process-control facility 34 is first field junction box 40, which houses second SCM 42 as well as first Universal Input/Output Modules (UIOMs) 44. Second SCM 42 is configured to receive optical communications from first SCM 30 over first optical fiber 32. Second SCM 42 is also configured to perform at least two additional functions. As a first additional function, SCM 42 is configured to relay the communications received from first SCM 30 over first optical fiber 32 to second process-control facility 36 via second optical fiber 38. As a second additional function, second SCM 42 is configured to transmit a subset of the commands contained in the received communications to field sensors S and actuators A that are connected to first field junction box 40. 144To determine which of the commands are addressed to such field sensors S and actuators A that are connected to first field junction box 40, second SCM 42 receives an indication of a set of addresses that correspond to such field sensors S and actuators A connected thereto. Second SCM 42 decodes the communications to identify a subset of the commands that correspond to the set of addresses indicated. Second SCM 42 then transmits the subset of the commands to the field sensors S and actuators A that are connected to first field junction box 40 via first UIOMs 44.

First UIOMs 44 provide a plurality of individually configurable control channels for the plurality of field sensors S and actuators A. Each of the plurality of individually configurable control channels can be configured to translate the commands to a sensor/actuator protocol corresponding to a corresponding one of the field sensors S and/or actuators A connected to first field junction box 40. Because second SCM 42 can transmit commands addressed to sensors S and actuators A as well as relay communications that include commands addressed to distant field sensors S_{distant} and actuators A_{distant} connected to another field junction box at another process-control facility (*e.g.*, second process-control facility 36), additional optical fiber need not be directly run between control room 22 and second process-control facility 36. Such dual functionality of second SCM 42 provides flexibility and cost savings, as long runs of optical fiber can be expensive and time consuming to provide.

Within second process-control facility 36 is second field junction box 46, which houses third SCM 48 as well as second UIOMs 50. Third SCM 48 is configured to receive optical communications from second SCM 42 over second optical fiber 38. Third SCM 48 is configured to then transmit a subset of the commands contained in the received communications to field sensors S and actuators A that are connected to second field junction box 46. To determine which of the commands are addressed to such field sensors S and actuators A that are connected to second field junction box 46, third SCM 48 receives an indication of set of addresses that correspond to such field sensors S and actuators A connected thereto. Third SCM 48 decodes the communications to identify a subset of the commands that correspond to the set of addresses indicated, Third SCM 48 then transmits the subset of the commands to the field sensors S and actuators A that are connected to second field junction box 46, via second UIOMs 50. Second UIOMs 50 are configured to provide a plurality of individually configurable control channels between third SCM 48 and the field sensors S and actuators A that are connected to second field junction box 46.

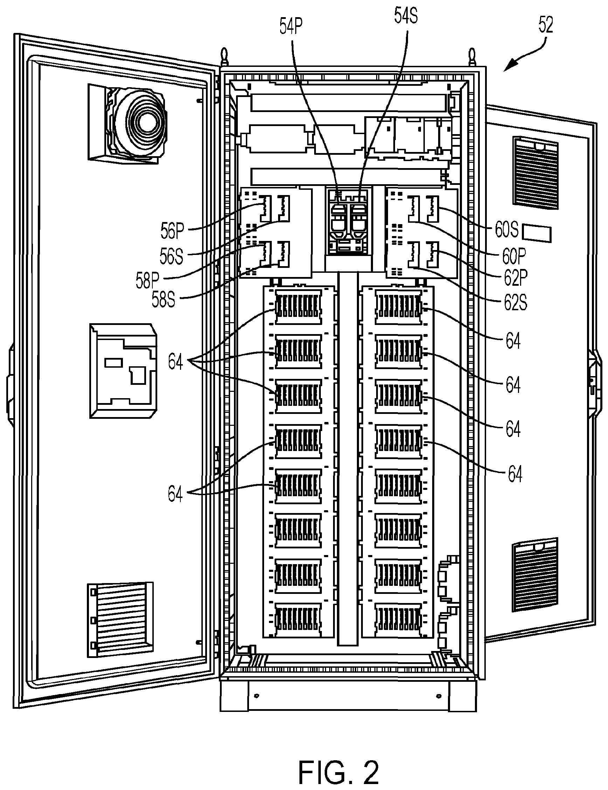

FIG. 2 is a front view of an example of a junction box 52 that houses electronics configured to facilitate control of a process. Junction boxes may be used to house electronic components that perform the various functions of process control pertaining to the process being controlled. Therefore, junction boxes, such as junction box 52 depicted in FIG. 2, can be used for any or all of junction boxes 26, 40, and 46, which are depicted in FIG. 1. Each of junction boxes 26, 40 and 46 would likely include different variations of electronic components, including different combinations of components than those depicted in FIG. 2. In FIG. 2, junction box 52 is configured both with components that may be found in a control room as well as components that are located near the process being controlled. Such a configuration might be provided for a junction box located in a control room located relatively near where the process is being performed, for example.

In FIG. 2, junction box 52 includes primary and secondary FCPs 54P and 54S. Primary and secondary FCPs 54P and 54S provide redundant control of a process such that the process can be maintained in an event in which one of primary and secondary FCPs 54P and 54S enters a failed state or otherwise becomes inoperative. Junction box 52 also includes eight SCMs: primary and secondary first SCMs 56P and 56S; primary and secondary second SCMs 58P and 58S; primary and secondary third SCMs 60P and 60S; and primary and secondary fourth SCMs 62P and 62S. Again, pairs of primary and secondary SCMs 56P/56S, 58P/58S, 60P/60S, and 62P62 provide redundant operation such that the process can be maintained in an event in which one of the primary or secondary SCMs becomes inoperative. Junction box 52 also includes a plurality of UIOMs 64, which are configured to provide a plurality of individually configurable control channels for a plurality of field sensors S and/or actuators A connected to junction box 52. UIOMs 64 can also be paired in primary/secondary fashion so as to provide redundant operation of the process. Because field sensors S and/or actuators A are connected to junction box 52, junction box 52 is configured for operation in a process-control facility near a processing site. Junction box 52 can be equipped in various other configurations, some of which are better suited for operation with a control room that is remote from a processing site, and others which are better suited for operation in a process-control facility at the processing site. These various configurations will be described below with reference to subsequent figures.

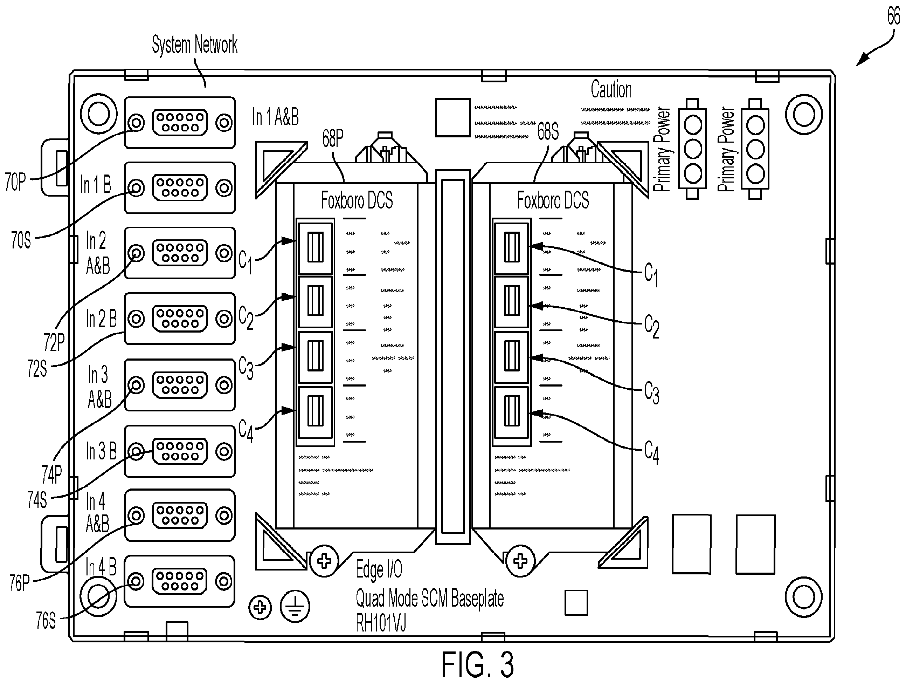

FIG. 3 is a front view of quad-mode system communications module (SCM) baseplate 66 configured in a quad-mode configuration. The quad-mode configuration can be used to facilitate communications over four bus channels that an FCP, such as FCP 54P and/or FCP 54S (depicted in FIG. 2), can use for providing communications to field sensors S and/or actuators A. Each bus channel can be configured to address a predetermined number of field sensors S and/or actuators A (*e.g.,* each bus channel can address 256 different devices). In FIG. 3, quad-mode SCM baseplate 66 includes primary SCM 68P and secondary SCM 68S connected to quad-mode SCM baseplate 66. Primary SCM 68P and secondary SCM 68S, in some embodiments, can be connected to quad-mode SCM baseplate 66 via connectors, so that should one of primary and second SCMs 68P and 68S fail, it could be easily replaced.

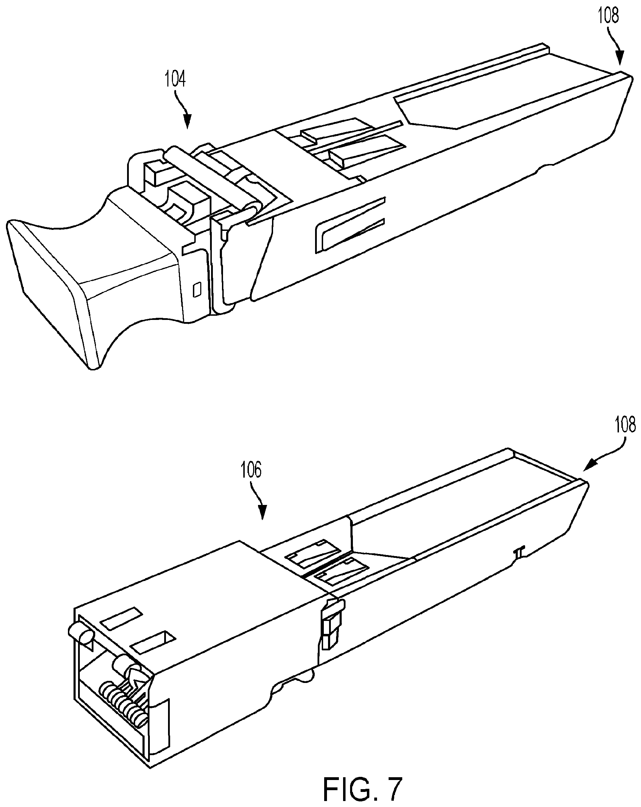

In quad-mode of operation, SCMs 68P and 68S receive communications transmitted by the primary and secondary FCPs via channel input connectors 70P and 70S, 72P and 72S, 74P and 74S, and 76P and 76S. Channel input connectors 70P and 70S are configured to be connected to a first bus channel of the primary and secondary FCPs, respectively. Channel input connectors 70P and 70S are electrically connected to primary and secondary SCMs 68P and 68S, thereby conductively communicating first-bus-channel communications received thereby to primary and secondary SCMs 68P and 68S, respectively. Each of primary and secondary SCMs 68P and 68S provides such first-bus-channel communications received to a first SFP connector C1 of four small form-factor pluggable (SFP) connectors C1-C4 on its face. Each of the four SFP connectors C1-C4 are configured to receive and provide bus-channel communications to an SFP module, which will be described below with reference to FIG. 7. In short, the SFP modules either electrically buffer or optically convert the communications provided thereto for transmission to other SCMs.

In a similar fashion, channel input connectors 72P and 72S are configured to be connected to a second bus channel of the primary and secondary FCPs, respectively. Channel input connectors 72P and 72S are electrically connected to primary and secondary SCMs 68P and 68S, thereby conductively communicating second-bus-channel communications received thereby to primary and secondary SCMs 68P and 68S, respectively. Each of primary and secondary SCMs 68P and 68S provides such second-bus-channel communications received to the second SFP connector C2 on its face.

Channel input connector pairs 74P/74S and 76P/76S are configured to be connected to a third bus channel and a fourth bus channel, respectively of the primary and secondary FCPs, respectively. Channel input connectors 74P and 76P and channel input connectors 74S and 76S are electrically connected to primary and secondary SCMs 68P and 68S, thereby conductively communicating third-bus-channel communications and fourth-bus-channel communications received thereby to primary and secondary SCMs 68P and 68S, respectively. Each of primary and secondary SCMs 68P and 68S provides such third-bus-channel communications and fourth-bus-channel communications received to the second SFP connectors C3 and C4 on its face, respectively.

Quad-mode SCM baseplate 66 facilitates communications generated on four bus channels to four other SCMs (or eight other SCMs if used in a redundant pair fashion). Should these other SCMs be located at distant locations, optical SFP modules can be used for providing optical communications over optical fiber. For SCMs that are located nearby, electrical SFP modules can be used for providing electrical communications over conductive wiring.

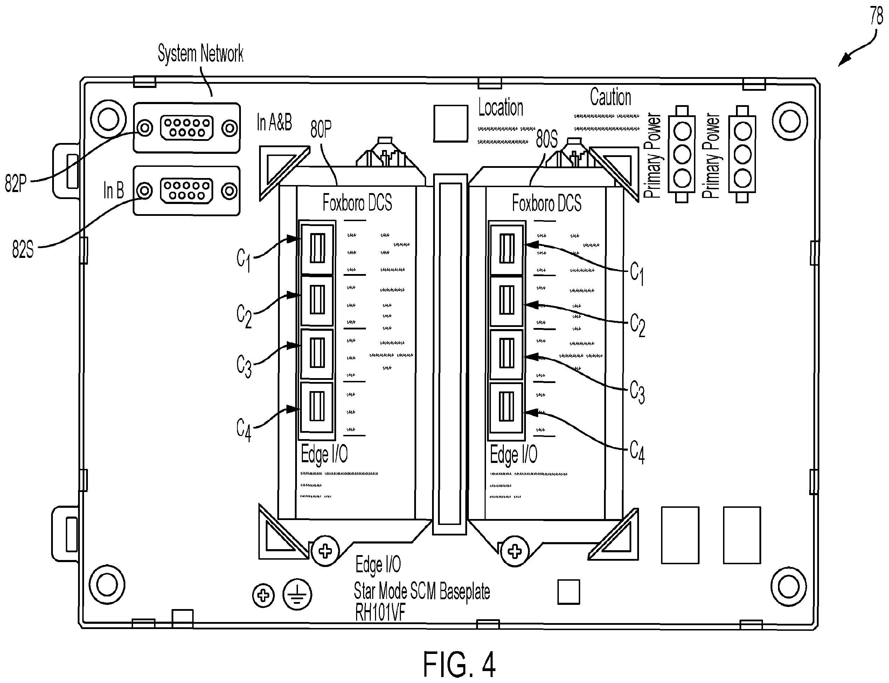

FIG. 4 is a front view of star-mode SCM baseplate 78 configured in a star-mode configuration. The star-mode configuration can be used to facilitate distribution of communications over a single bus channel of an FCP to up to four other SCMs. In FIG. 4, star-mode SCM baseplate 78 includes primary SCM 80P and secondary SCM 80S connected to star-mode SCM baseplate 78. Primary SCM 80P and secondary SCM 80S, in some embodiments, can be connected to star-mode SCM baseplate 78 via connectors, so that should one of primary and second SCMs 80P and 80S fail, it could be easily replaced.

In star-mode of operation, SCMs 80P and 80S receive communications transmitted by the primary and secondary FCPs via channel input connectors 82P and 82S. Channel input connectors 82P and 82S are configured to be connected to a single bus channel of the primary and secondary FCPs, respectively. Channel input connectors 82P and 82S conductively communicate transmissions received thereby to primary and secondary SCMs 80P and 80S, respectively. Each of primary and secondary SCMs 80P and 80S provides such communications received to all four SFP connectors C1-C4 on its face. Each of the four SFP connectors C1-C4 are configured to receive and provide channel communications to an SFP module, which will be described below with reference to FIG. 7. These star-configured SCMs 80P and 80S facilitate communications generated on a single bus channel to four other SCMs (or eight other SCMs if used in a redundant fashion). Should these other SCMs be located at distant locations, optical SFP modules can be used for providing optical communications over optical fiber. For SCMs that are located nearby, electrical SFP modules can be used for providing electrical communications over conductive wiring.

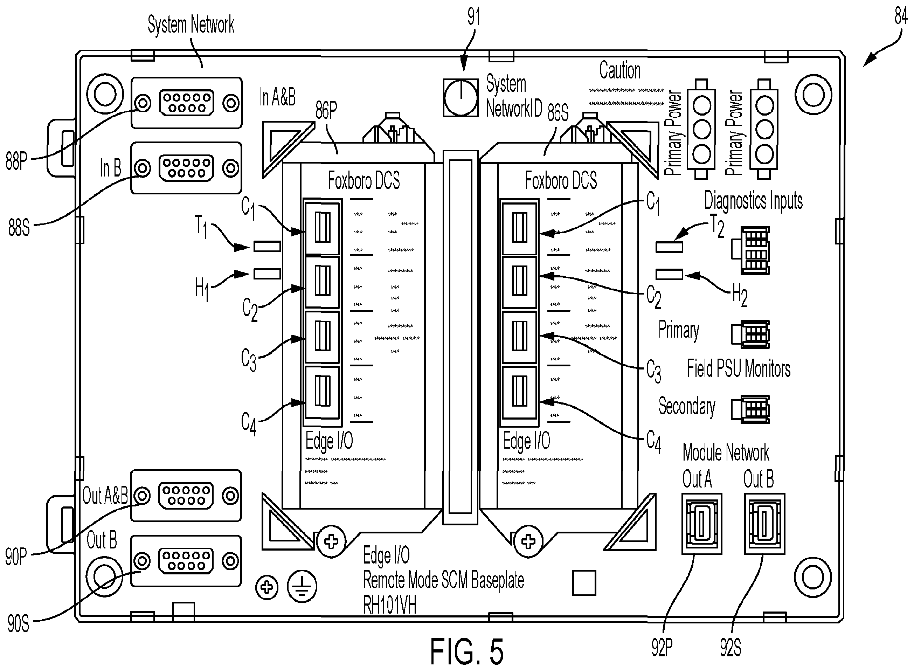

FIG. 5 is a front view of remote-mode SCM baseplate 84 configured in a remote-mode configuration. In FIG. 5, remote-mode SCM baseplate 84 includes primary SCM 86P and secondary SCM 86S connected to remote-mode SCM baseplate 84. Primary SCM 86P and secondary SCM 86S, in some embodiments, can be connected to remote-mode SCM baseplate 84 via connectors, so that should one of primary and second SCMs 86P and 86S fail, it could be easily replaced. In the remote-mode configuration, primary and secondary SCMs 86P and 86S receive communications transmitted by the primary and secondary FCPs either via channel input connectors 88P and 88S or via SFP connectors C1, which have SFP modules configured to receive either optical signals or electrical signals. Each of primary and secondary SCMs 86P and 86S can be configured to relay the communications received to up to three other SCMs (or up to six other SCMs if configured as redundant pairs of SCMs). Each of primary SCM 86P and secondary SCM 86S can relay the communications received to such other SCMs either via channel output connectors 90P and 90S on remote-mode SCM baseplate 84 or via SFP connectors C2-C4 on its face.

Remote-mode SCM baseplate 84 includes temperature sensors T1 and T2 and humidity sensors H1 and H2. Temperature sensor T1 is a primary temperature sensor, and temperature sensor T2 is a secondary temperature sensor. Secondary temperature sensor T2 will be used in an event in which primary temperature sensor T1 is non-responsive, damaged, or otherwise inoperative. Humidity sensor H1 is a primary humidity sensor, and humidity sensor H2 is a secondary humidity sensor. Secondary humidity sensor H2 will be used in an event in which primary humidity sensor H1 is non-responsive, damaged, or otherwise inoperative. When remote-mode SCM baseplate 84 is installed in a remote junction box, temperature sensors T1 and T2 and humidity sensors H1 and H2 will be configured to measure temperature and humidity of such a remote junction box. Temperature sensors T1 and T2 and humidity sensors H1 and H2 are configured to send the temperature signal to primary and secondary SCMs 86P and 86S. Each of temperature sensors T1 and T2 is configured to generate a temperature signal indicative of the temperature of the environment within the remote field junction box. Each of humidity sensors H1 and H2 is configured to generate a humidity signal indicative of the humidity of the environment within the field junction box.

Not only can remote-mode SCM baseplate 84 relay communications received to other SCMs, but primary and secondary SCMs 86P and 86S can also decode the communications received to identify a subset of the commands that correspond to addresses of field sensors S and actuators A that are controlled by primary and secondary SCMs 86P and 86S. Such addresses of field sensors S and actuators A are within the set of addresses of remote-mode SCM baseplate 84. Address selection switch 91 can be used, for example, to indicate the set of addresses (*i.e.,* in an address space) corresponding to remote-mode SCM baseplate 84. For example, address selection switch 91 can select from among four address spaces corresponding to four distinct sets of addresses.

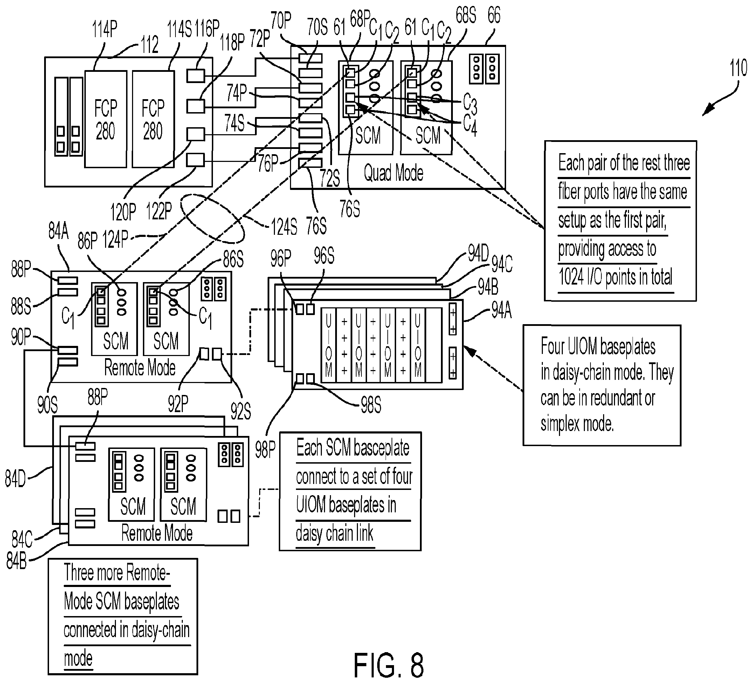

After identifying the subset of commands that correspond to addresses of field sensors S and actuators A that are controlled by primary and secondary SCMs 86P and 86S, primary and secondary SCMs 86P and 86S transmit the subset of the commands to the subset of the plurality of field sensors S and/or actuators A that are controlled thereby. In this way, remote-configured SCM baseplate 84 can be used to control local field sensors S and/or actuators A connected thereto as well as to relay communications that include commands addressed to other field sensors and/or actuators controlled by another SCM. Such other commands addressed to other field sensors and/or actuators controlled by another SCM reside in another address space - not within the set of addresses of remote-mode SCM baseplate 84. The subset of commands is electrically transmitted via command output connectors 92P and 92S (depicted in FIG. 5). The various configurations of SCMs offer much flexibility in configuring a control system for an industrial process, as will be shown below with reference to FIGS. 8-11.

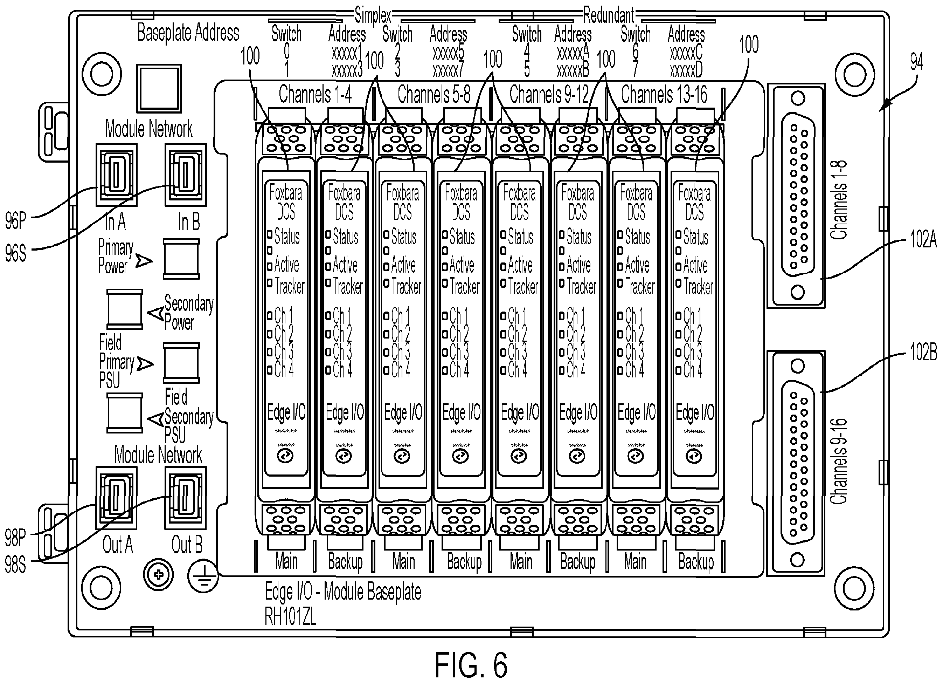

FIG. 6 is a front view of a Universal Input/Output Module (UIOM) baseplate for translating commands to and from field sensors and actuators. In FIG. 6, UIOM baseplate 94 includes command input connectors 96P and 96S which are configured to be electrically connected to command output connectors 92P and 92S (depicted in FIG. 5), respectively, of an SCM, such as SCM 86P and 86S. Command input connectors 96A and 96B are therefore configured to receive the electrical commands transmitted by SCMs 86P and 86S of remote-mode SCM baseplate 84 (depicted in FIG. 5). UIOM baseplate 94 also has command output connectors 98A and 98B which can be used to relay the commands received at command input connectors 96A and 96B to command output connectors 98A and 98B, thereby facilitating daisy-chaining multiple UIOM baseplates together.

UIOM baseplate 94 is configured to receive a plurality of UIOMs 100, each of which is capable of providing four individually configurable control channels for field sensors S and/or actuators A connected thereto. Each of the plurality of individually configurable control channels can be configured to translate the commands to a sensor/actuator protocol associated with a corresponding one of the field sensors S and/or actuators A connected thereto via sensor/actuator connectors 102A and 102B.

FIG. 7 is a perspective view of examples of small form-factor pluggable SFP modules. In FIG. 7, optical SFP module 104 and electrical SFP module 106 are depicted. Each of optical SFP module 104 and electrical SFP module 106 is configured to be received within one of the SFP connectors C1-C4 on the face of an SCM, such as SCM 68P or SCM 68S (depicted in FIG. 3). Each of optical SFP module 104 and electrical SFP module 106 makes electrical connection with the SCM which receives it via an electrical interface 108 at a received end of the SFP module. Optical SFP module 104 is configured to interface with an optical fiber at an end opposite to the received end of the SFP module. Electrical SFP module 106 is configured to interface with electrical conductors at an end opposite to the received end of the SFP module.

FIG. 8 is a schematic diagram of an example configuration of a process control system using a quad-mode SCM baseplate and daisy-chain connected remote-mode SCM baseplates. In FIG. 8, process control system 110 includes FCP baseplate 112, quad-mode SCM baseplate 66, remote-mode SCM baseplates 84A, 84B, 84C, and 84D, and 16 UOIM baseplates, including the expressly depicted UIOM baseplates 94A, 94B, 94C, and 94D. FCP baseplate 112 includes primary and secondary FCPs 114P and 114S. FCP baseplate 112 provides communications over four channel busses connected to channel output connectors 116P, 118P, 120P and 122P (only the primary channel output connectors are depicted, but in some embodiments, FCP baseplate 112 also includes secondary channel output connectors for purposes of redundancy).

Quad-mode SCM baseplate 66 includes channel input connectors 70P and 70S, 72P and 72S, 74P and 74S, and 76P and 76S. In the depicted embodiment, the primary input connectors 70P, 72P, 74P, and 76P are conductively connected to channel output connectors 116P, 118P, 120P and 122P, respectively, of FCP baseplate 112. Although not depicted, in some embodiments, the secondary input connectors 70S, 72S, 74S, and 76S are conductively connected to channel output connectors 116S, 118S, 120S and 122S, respectively, of FCP baseplate 112. By forming such electrical connections, primary and secondary SCMs 68P and 68S are configured to receive communications transmitted over the four primary and secondary bus channels. Typically, FCP baseplate 112 and quad-mode SCM baseplate 66 would be mounted in a control-room junction box and located within a control room where the process is being controlled.

If the processing site is located remotely from the control room, SCMs 68P and 68S would receive an SFP optical transceiver 104 within each of SFP connectors C1-C4 for providing optical transmission of communications to the remote processing site. If, however, the processing site is nearby the control room, SCMs 68P and 68S might receive an SFP electrical transceiver 106 within each of SFP connectors C1-C4 for providing electrical transmission of communications to the remote-mode SCM baseplates, which could perhaps reside in the control room or even within the control-room junction box in which the SFP baseplate and the quad-mode SCM baseplate reside. In the depicted figure, only fibers 124P and 124S are expressly depicted, providing optical connections between the SFP connectors C1 of SCMs 68P and 68S of quad-mode SCM baseplate 66 and connectors C1 of SCMs 86P and 86S of remote-mode SCM baseplate 84A. Typically, other optical fibers would provide optical connection between the SFP connectors C2, C3, and C4 to three other SCM baseplates, which could be located nearby or distant from remote-mode SCM baseplate 84A.

Remote-mode SCM baseplate 84A is connected to UIOM baseplates 94A, 94B, 94C, and 94D in daisy-chain fashion. Such daisy-chain configuration is obtained by electrically connecting: command output connectors 92P and 92S of remote-mode SCM baseplate 84A with command input connectors 96A and 96B of UIOM baseplate 94A; command output connectors 98P and 98S of UIOM baseplate 94A with command input connectors 96A and 96B of UIOM baseplate 94B; command output connectors 98P and 98S of UIOM baseplate 94B with command input connectors 96A and 96B of UIOM baseplate 94B; and command output connectors 98P and 98S of UIOM baseplate 94C with command input connectors 96A and 96B of UIOM baseplate 94D. Each of UIOM baseplates 94A, 94B, 94C, and 94D can then be connected to a plurality of field sensors S and/or actuators A.

Remote-mode SCM baseplate 84A not only receives optical communications via optical fibers 124P and 124S but relays such communications to remote-mode SCM baseplates 84B, 84C, and 84D, which are connected in daisy-chain fashion. Such daisy chain configuration of remote-mode baseplates 84B, 84C, and 84D is obtained by electrically connecting: channel output connectors 90P and 90S of remote-mode SCM baseplate 84A with channel input connectors 88P and 88S of remote-mode UIOM baseplate 84B; channel output connectors 90P and 90S of remote-mode SCM baseplate 84B with channel input connectors 88P and 88S of remote-mode UIOM baseplate 84C; channel output connectors 90P and 90S of remote-mode SCM baseplate 84C with channel input connectors 88P and 88S of remote-mode UIOM baseplate 84D. Each of remote-mode SCM baseplates 84B-84D can be connected to four UIOM baseplates in a similar manner as is described above for connecting UIOM baseplates 94A-94D to remote-mode SCM baseplate 84A.

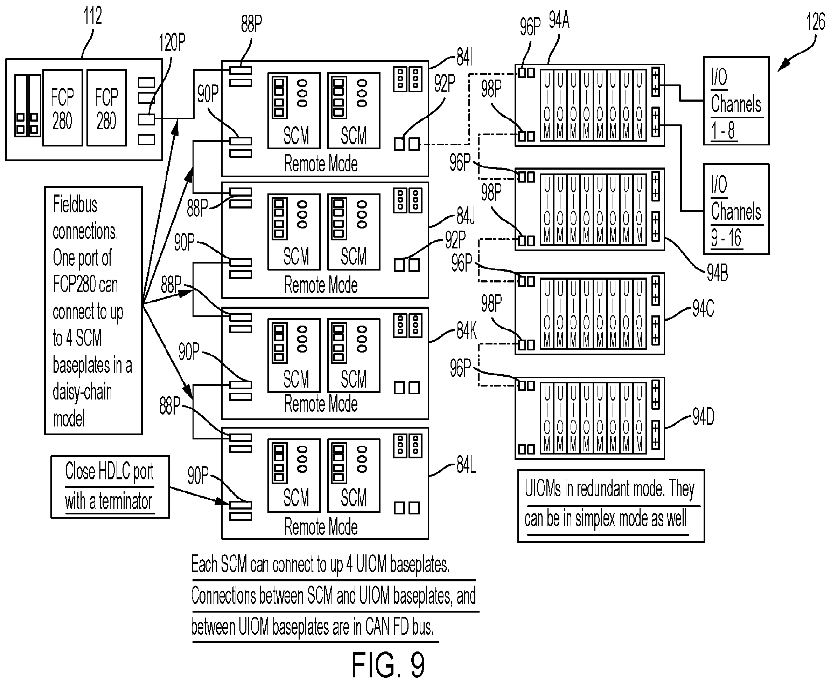

FIG. 9 is a schematic diagram of an example configuration of a process control system using a plurality of SCMs configured a remote-mode configuration and connected in daisy-chain fashion via electrical conductors. In FIG. 9, process control system 126 is similar to process control system 110 as depicted in FIG. 8, except that instead of including quad-mode SCM baseplate 66 for providing optical communications with remote-mode SCM baseplates 84A as well as three other remote-mode SCM baseplates (such as remote-mode SCM baseplates 84E, 84I, and 84M, which are not depicted in FIG. 8), FCP baseplate 112 is directly and electrically connected to remote-mode SCM baseplates 84I, 84J, 84K, and 84L. Expressly depicted in FIG. 9 is the configuration of a third channel bus corresponding to channel output connector 120P. First, second, and fourth channel busses can be similarly configured to the third channel bus depicted in FIG. 9. Such electrical connection with remote-mode SCM baseplates can be performed when a control room can be located nearby field sensors S and/or actuators A controlled thereby.

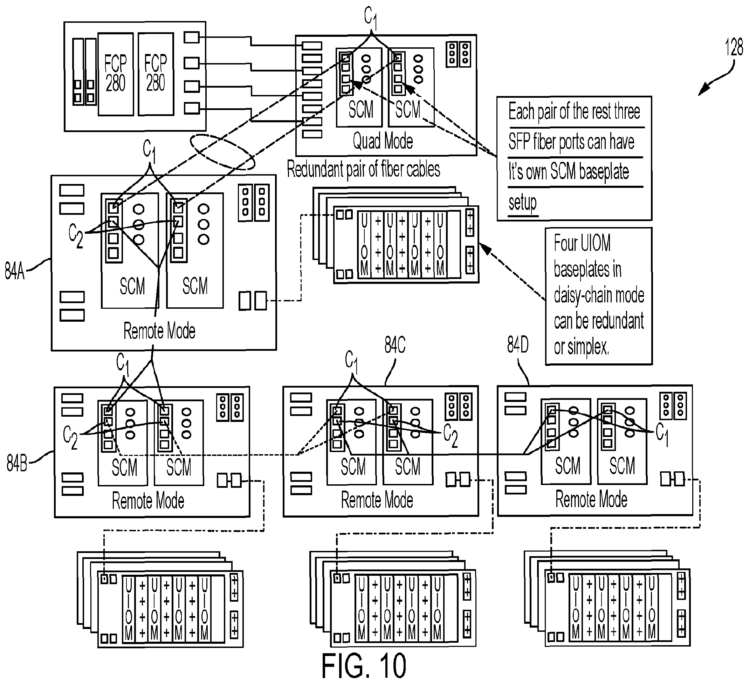

FIG. 10 is a schematic diagram of an example configuration of a process control system using an SCM configured in a star-mode configuration via optical fibers. In FIG. 10, process control system 128 is similar to process control system 110 as depicted in FIG. 8, except that instead of electrically connecting remote-mode SCM baseplates 84A, 84B, 84C, and 84D in daisy-chain fashion, remote-mode SCM baseplates 84A, 84B, 84C, and 84D are optically connected to one another in daisy-chain fashion. Such daisy-chain configuration of remote-mode baseplates 84B, 84C, and 84D is obtained by optically connecting: SFP optical transceivers 104 (depicted in FIG. 7) in second SFP connectors C2 of remote-mode SCM baseplate 84A to optical transceivers 104 in first SFP connectors C1 of remote-mode SCM baseplate 84B; SFP optical transceivers 104 in second SFP connectors C2 of remote-mode SCM baseplate 84B to optical transceivers 104 in first SFP connectors C1 of remote-mode SCM baseplate 84C; SFP optical transceivers 104 in second SFP connectors C2 of remote-mode SCM baseplate 84C to optical transceivers 104 in first SFP connectors C1 of remote-mode SCM baseplate 84D. Such optical daisy-chaining of remote-mode SCM baseplates 84A-84D can be used when remote-mode SCM baseplates 84A-84D are located more than a predetermined distance from one another (e.g., more than 60 meters apart).

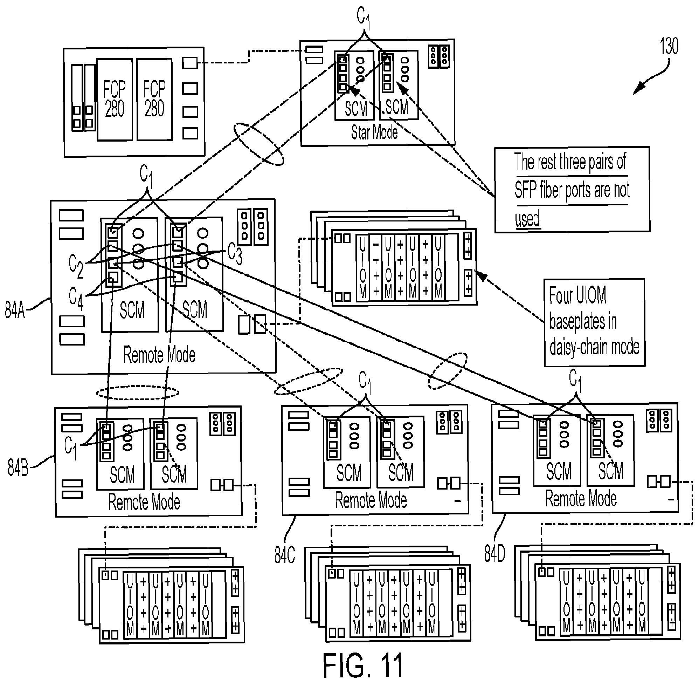

FIG. 11 is a schematic diagram of an example configuration of a process control system using an SCM configured in a daisy-chain fashion via optical fibers. In FIG. 11, process control system 130 is similar to process control system 110 as depicted in FIG. 8, except that instead of electrically connecting remote-mode SCM baseplates 84A, 84B, 84C, and 84D in daisy-chain fashion, remote-mode SCM baseplates 84A, 84B, 84C, and 84D are optically connected to one another in star-configuration fashion. Such star configuration of remote-mode baseplates 84B, 84C, and 84D is obtained by optically connecting: SFP optical transceivers 104 in second SFP connectors C2 of remote-mode SCM baseplate 84A to optical transceivers 104 in first SFP connectors C1 of remote-mode SCM baseplate 84B; SFP optical transceivers 104 in third SFP connectors C3 of remote-mode SCM baseplate 84A to optical transceivers 104 in first SFP connectors C1 of remote-mode SCM baseplate 84C; SFP optical transceivers 104 in fourth SFP connectors C4 of remote-mode SCM baseplate 84A to optical transceivers 104 in first SFP connectors C1 of remote-mode SCM baseplate 84D. Such an optical star-configuration of remote-mode SCM baseplates 84A-84D can be used when remote-mode SCM baseplates 84B-84D are located more than a predetermined distance from remote-mode SCM baseplate 81A (*e.g*., more than 60 meters apart).

Various aspects of each of the example configurations depicted in FIGS. 8-11 can be used to create a wide variety of configurations, each suited for controlling a differently configured process. Optical communication links can be selected for communications between junction boxes that are located at a distance greater than the predetermined distance limiting electrical communications. Any optical communications links can be formed by simply using optical transceivers 104 in SFP connectors, as disclosed above in the various configurations depicted.

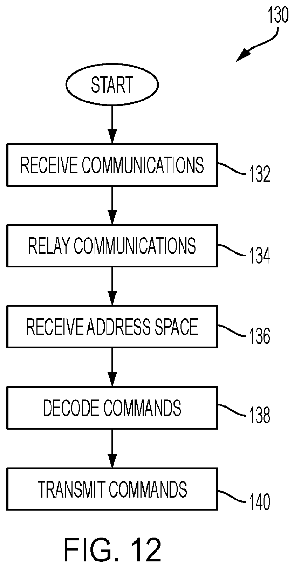

FIG. 12 is a flow chart for a method of communication between a Field Control Processor (FCP) and a plurality of field sensors and/or actuators. In FIG. 12, method 132 is described from a vantage point of remote-mode SCM 84. Method 132 begins at step 134, where communications are received from the FCP over a first optical fiber. The communications include commands addressed to the plurality of field sensors and/or actuators. Then, method 132 advances to step 136, where the communications received from the FCP over the first optical fiber are relayed to one or more remote field junction boxes via one or more other optical fibers. Method 132 then advances to step 138, where an indication of a set of addresses that correspond to a subset of the plurality of field sensors and/or actuators are received. The subset of the plurality of field sensors and/or actuators are those that are connected to controlled by the SCM. Then, method 132 advances to step 140, where the communications are decoded to identify a subset of the commands that correspond to the indicated address space. Method 132 then advances to step 142, where the subset of the commands are transmitted to the subset of the plurality of field sensors and/or actuators that are controlled by the SCM.

While the various aspects of the disclosure have been described with reference to an example embodiment(s), it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure and example embodiments not be limited to the particular embodiment(s) disclosed, but that the disclosure and examples herein at least include all embodiments falling within the scope of the appended claims.

Further aspects of the invention are provided by the subject matter of the following clauses:
Clause 1. A process control system for providing a communication interface between a Field Control Processor (FCP) and a plurality of field devices, the plurality of field devices comprising two or more devices selected from the group consisting of sensors and actuators,
the process control system comprising:
   a first System Communications Module (SCM) configured to:
      receive communications from the FCP, the communications including commands addressed to the plurality of field devices; and
      transmit the received communications via a first optical fiber; and
   a second SCM configured in a remote-mode of operation, wherein in the remote-mode of operation the second SCM is configured to:
      receive the communications transmitted thereto from the first SCM over the first optical fiber;
      relay the communications received from the first SCM over the first optical fiber to one or more other remote field junction boxes via one or more other optical fibers;
      receive an indication of a set of addresses that corresponds to a subset of the plurality of field devices, the subset of the plurality of field devices being controlled by the second SCM;
      decode the communications to identify a subset of the commands that correspond to the set of addresses indicated; and
      transmit the subset of the commands to the subset of the plurality of field devices that are controlled by the second SCM.
Clause 2. The process control system of Clause 1, wherein:
   the set of addresses that corresponds to the subset of the plurality of field devices comprises a first address space corresponding to a first subset of the plurality of field devices being controlled by the second SCM,
   the process control system further comprises a third SCM configured in a remote-mode of operation, wherein in the remote-mode of operation the third SCM is configured to:
      receive the communications, which are relayed thereto by the second SCM;
      receive an indication of a second address space that corresponds to a second subset of the plurality of field devices, the second subset of the plurality of field devices being controlled by the third SCM;
      decode the communications to identify a second subset of the commands that correspond to the second address space indicated; and
      transmit the second subset of the commands to the second subset of the plurality of field devices that are controlled by the third SCM.
Clause 3. The process control system of Clause 2, wherein the communications received are electrically transmitted by the second SCM via an electrical conductor.
Clause 4. The process control system of Clause 2 or Clause 3, wherein the communications received are optically transmitted by the second SCM via a third optical fiber.
Clause 5. The process control system of any of Clauses 2 to 4, further comprising a fourth SCM configured in a remote-mode of operation, wherein in the remote-mode of operation the fourth SCM is configured to:
   receive the communications relayed thereto by the second SCM;
   receive an indication of a third address space that corresponds to a third subset of the plurality of field devices, the third subset of the plurality of field devices being controlled by the fourth SCM;
   decode the communications to identify a third subset of the commands that correspond to the third address space indicated; and
   transmit the third subset of the commands to the third subset of the plurality of field devices that are controlled by the fourth SCM.
Clause 6. The process control system of Clause 5, wherein the communications received are electrically transmitted by the second SCM via an electrical conductor.
Clause 7. The process control system of Clause 5 or Clause 6, further comprising a fifth SCM configured in a remote-mode of operation, wherein in the remote-mode of operation the fifth SCM is configured to:
   receive the communications transmitted thereto by the FCP or by the second SCM;
   receive an indication of a fourth address space that corresponds to a fourth subset of the plurality of field devices, the fourth subset of the plurality of field devices being controlled by the fifth SCM;
   decode the communications to identify a fourth subset of the commands that correspond to the fourth address space indicated; and
   transmit the fourth subset of the commands to the fourth subset of the plurality of field devices that are controlled by the fifth SCM.
Clause 8. The process control system of Clause 1, wherein:
   the communications received by the first SCM from the FCP are first communications received over a first channel bus;
   the commands addressed to the plurality of field devices are a first set of commands addressed to a first plurality of field devices;
   the first communications received are transmitted by a third SCM via the first optical fiber; and
   the process control system further comprises a third SCM configured to:
      receive second communications from the FCP over a second channel bus, the second communications including a second set of commands addressed to a second plurality of field devices; and
      transmit the received second communications via a second optical fiber.
Clause 9. The process control system of Clause 8, further comprising a fourth SCM configured to:
   receive third communications from the FCP over a third channel bus, the third communications including a third set of commands addressed to a third plurality of field devices; and
   transmit the received third communications via a third optical fiber.
Clause 10. The process control system of Clause 9, further comprising a fifth SCM configured to:
   receive fourth communications from the FCP over a fourth channel bus, the fourth communications including a fourth set of commands addressed to a fourth plurality of field devices; and
   transmit the received fourth communications via a fourth optical fiber.
Clause 11. The process control system of Clause 10, wherein the first SCM is configured in a quad-mode configuration, wherein in the quad-mode configuration, the first SCM transmits communications of the first, second, third, and fourth channel busses to each of the second SCM, third SCM, fourth SCM, and fifth SCM, respectively.
Clause 12. The process control system of Clause 1, wherein the first SCM is further configured to:
   transmit the received communications via a second optical fiber to a third SCM.
Clause 13. The process control system of Clause 12, wherein the first SCM is further configured to:
   transmit the received communications via a third optical fiber to a fourth SCM.
Clause 14. The process control system of Clause 13, wherein the first SCM is further configured to:
   transmit the received communications via a fourth optical fiber to a fifth SCM.
Clause 15. The process control system of Clause 14, wherein the first SCM is configured in a star-mode configuration, wherein in the star-mode configuration, the first SCM receives communications on a single channel bus and then transmits the received communications to each of the second SCM, third SCM, fourth SCM, and fifth SCM.
Clause 16. The process control system of any of Clauses 1 to 15, further comprising:
   a plurality of Universal Input/Output Modules (UIOMs) configured to provide a plurality of individually configurable control channels between the second SCM and the plurality of field devices controlled by the second SCM, each of the plurality of individually configurable control channels configured to translate the commands to a sensor/actuator protocol corresponding to a corresponding one of the field devices controlled by the second SCM.
Clause 17. The process control system of any of Clauses 1 to 16, wherein the process control system comprises a dual-redundant control system with the first SCM comprising a first primary SCM, the first optical fiber comprising a first primary optical fiber, the second SCM comprising a second primary SCM, and the other optical fibers comprising other primary optical fibers, the dual-redundant control system further comprising first and second secondary SCMs, a first secondary optical fiber, and a secondary other optical fibers, wherein the dual-redundant control system is configured to provide a redundant communication interface between the FCP and the plurality of field devices.
Clause 18. A System Communications Module (SCM) for providing a communication interface between a Field Control Processor (FCP) and a plurality of field devices, the plurality of field devices comprising one or more devices selected from the group consisting of sensors and actuators, the SCM comprising:
   a small form-factor pluggable (SFP) port configured to accept a first optical transceiver for receiving communications from the FCP over a first optical fiber, the communications including commands addressed to the plurality of field devices;
   a relay controller configured to relay the communications received from the FCP over the first optical fiber to one or more remote field junction boxes via one or more other optical fibers;
   an address selection switch configured to generate a selection signal indicating a set of addresses that corresponds to a subset of the plurality of field devices, the subset of the plurality of field devices being controlled by the SCM;
   a decoder configured to decode the communications to identify a subset of the commands that correspond to the indicated address space; and
   a transmitter configured to transmit the subset of the commands to the subset of the plurality of field devices that are controlled by the SCM.
Clause 19. The SCM of Clause 18, further comprising:
   a plurality of Universal Input/Output Modules (UIOMs) configured to provide a plurality of individually configurable control channels between the SCM and the plurality of field devices controlled by the SCM, each of the plurality of individually configurable control channels configured to translate the commands to a sensor/actuator protocol corresponding to a corresponding one of the field devices controlled by the SCM.
Clause 20. A method for transmitting commands and relaying communications from a Field Control Processor (FCP) and a plurality of field devices, the plurality of field devices comprising two or more devices selected from the group consisting of sensors and actuators, the method comprising:
   receiving communications from the FCP over a first optical fiber, the communications including commands addressed to the plurality of field devices;
   relaying the communications received from the FCP over the first optical fiber to one or more remote field junction boxes via one or more other optical fibers;
   receiving an indication of a set of addresses that corresponds to a subset of the plurality of field devices, the subset of the plurality of field devices being controlled by the SCM;
   decoding the communications to identify a subset of the commands that correspond to the indicated address space; and
   transmitting the subset of the commands to the subset of the plurality of field devices that are controlled by the SCM.

## Claims

1. A process control system for providing a communication interface between a Field Control Processor, FCP, (28) and a plurality of field devices, the plurality of field devices comprising two or more devices selected from the group consisting of sensors and actuators, the process control system comprising:
a first System Communications Module, SCM, (30) configured to:
receive communications from the FCP (28), the communications including commands addressed to the plurality of field devices; and
transmit the received communications via a first optical fiber; and
a second SCM (42) configured in a remote-mode of operation, wherein in the remote-mode of operation the second SCM (42) is configured to:
receive the communications transmitted thereto from the first SCM (30) over the first optical fiber;
relay the communications received from the first SCM (30) over the first optical fiber to one or more other remote field junction boxes via one or more other optical fibers;
receive an indication of a set of addresses that corresponds to a subset of the plurality of field devices, the subset of the plurality of field devices being controlled by the second SCM (42);
decode the communications to identify a subset of the commands that correspond to the set of addresses indicated; and
transmit the subset of the commands to the subset of the plurality of field devices that are controlled by the second SCM (42).

2. The process control system of claim 1, wherein:
the set of addresses that corresponds to the subset of the plurality of field devices comprises a first address space corresponding to a first subset of the plurality of field devices being controlled by the second SCM (42), and
the process control system comprises a third SCM (48) configured in a remote-mode of operation, wherein in the remote-mode of operation the third SCM (48) is configured to:
receive the communications, which are relayed thereto by the second SCM (42);
receive an indication of a second address space that corresponds to a second subset of the plurality of field devices, the second subset of the plurality of field devices being controlled by the third SCM (48);
decode the communications to identify a second subset of the commands that correspond to the second address space indicated; and
transmit the second subset of the commands to the second subset of the plurality of field devices that are controlled by the third SCM (48).

3. The process control system of claim 2, wherein the communications received are at least one of electrically transmitted by the second SCM (42) via an electrical conductor or optically transmitted by the second SCM (42) via a third optical fiber.

4. The process control system of claim 2 or claim 3, comprising a fourth SCM configured in a remote-mode of operation, wherein in the remote-mode of operation the fourth SCM is configured to:
receive the communications relayed thereto by the second SCM (42);
receive an indication of a third address space that corresponds to a third subset of the plurality of field devices, the third subset of the plurality of field devices being controlled by the fourth SCM;
decode the communications to identify a third subset of the commands that correspond to the third address space indicated; and
transmit the third subset of the commands to the third subset of the plurality of field devices that are controlled by the fourth SCM.

5. The process control system of claim 4, wherein the communications received are electrically transmitted by the second SCM (42) via an electrical conductor.

6. The process control system of claim 4 or claim 5, comprising a fifth SCM configured in a remote-mode of operation, wherein in the remote-mode of operation the fifth SCM is configured to:
receive the communications transmitted thereto by the FCP (28) or by the second SCM (42);
receive an indication of a fourth address space that corresponds to a fourth subset of the plurality of field devices, the fourth subset of the plurality of field devices being controlled by the fifth SCM;
decode the communications to identify a fourth subset of the commands that correspond to the fourth address space indicated; and
transmit the fourth subset of the commands to the fourth subset of the plurality of field devices that are controlled by the fifth SCM.

7. The process control system of claim 1, wherein:
the communications received by the first SCM (30) from the FCP (28) are first communications received over a first channel bus;
the commands addressed to the plurality of field devices are a first set of commands addressed to a first plurality of field devices;
the first communications received are transmitted by a third SCM (48) via the first optical fiber; and
the process control system comprises a third SCM (48) configured to:
receive second communications from the FCP (28) over a second channel bus, the second communications including a second set of commands addressed to a second plurality of field devices; and
transmit the received second communications via a second optical fiber.

8. The process control system of claim 7, comprising a fourth SCM configured to:
receive third communications from the FCP (28) over a third channel bus, the third communications including a third set of commands addressed to a third plurality of field devices; and
transmit the received third communications via a third optical fiber.

9. The process control system of claim 8, comprising a fifth SCM configured to:
receive fourth communications from the FCP (28) over a fourth channel bus, the fourth communications including a fourth set of commands addressed to a fourth plurality of field devices; and
transmit the received fourth communications via a fourth optical fiber.

10. The process control system of claim 9, wherein the first SCM (30) is configured in a quad-mode configuration, wherein in the quad-mode configuration, the first SCM (30) transmits communications of the first, second, third, and fourth channel busses to each of the second SCM (42), third SCM (48), fourth SCM, and fifth SCM, respectively.

11. The process control system of claim 1, wherein:
the first SCM (30) is configured to transmit the received communications via a second optical fiber to a third SCM (48),
and optionally the first SCM (30) is configured to transmit the received communications via a third optical fiber to a fourth SCM,
and optionally the first SCM (30) is configured to transmit the received communications via a fourth optical fiber to a fifth SCM.

12. The process control system of claim 11, wherein the first SCM (30) is configured in a star-mode configuration, wherein in the star-mode configuration, the first SCM (30) receives communications on a single channel bus and then transmits the received communications to each of the second SCM (42), third SCM (48), fourth SCM, and fifth SCM.

13. The process control system of any of claims 1 to 12, comprising:
a plurality of Universal Input/Output Modules, UIOMs, configured to provide a plurality of individually configurable control channels between the second SCM (42) and the plurality of field devices controlled by the second SCM (42), each of the plurality of individually configurable control channels being configured to translate the commands to a sensor/actuator protocol corresponding to a corresponding one of the field devices controlled by the second SCM (42).

14. The process control system of any of claims 1 to 13, wherein the process control system comprises a dual-redundant control system with the first SCM (30) comprising a first primary SCM, the first optical fiber comprising a first primary optical fiber, the second SCM (42) comprising a second primary SCM, and the other optical fibers comprising other primary optical fibers, the dual-redundant control system comprising first and second secondary SCMs, a first secondary optical fiber, and a secondary other optical fibers, wherein the dual-redundant control system is configured to provide a redundant communication interface between the FCP (28) and the plurality of field devices.

15. A System Communications Module, SCM, (30) for providing a communication interface between a Field Control Processor, FCP, (28) and a plurality of field devices, the plurality of field devices comprising one or more devices selected from the group consisting of sensors and actuators, the SCM (30) comprising:
a small form-factor pluggable, SFP, port configured to accept a first optical transceiver for receiving communications from the FCP (28) over a first optical fiber, the communications including commands addressed to the plurality of field devices;
a relay controller configured to relay the communications received from the FCP (28) over the first optical fiber to one or more remote field junction boxes via one or more other optical fibers;
an address selection switch configured to generate a selection signal indicating a set of addresses that corresponds to a subset of the plurality of field devices, the subset of the plurality of field devices being controlled by the SCM (30);
a decoder configured to decode the communications to identify a subset of the commands that correspond to the indicated address space; and
a transmitter configured to transmit the subset of the commands to the subset of the plurality of field devices that are controlled by the SCM (30).
